# EUROPÄISCHE PATENTSCHRIFT

(11) **EP 3 328 339 B1**
(45) Veröffentlichungstag und Bekanntmachung des Hinweises auf die Patenterteilung: **22.05.2019**
(21) Anmeldenummer: 16739508.6
(22) Anmeldetag: 19.07.2016
(51) Int. Cl.: A61G 7/08, A61G 13/10

(54) **MOTORISIERTER LAGERFLÄCHENTRANSPORTER FÜR EIN OPERATIONSTISCHSYSTEM**
MOTORIZED BEARING SURFACE TRANSPORTER FOR AN OPERATING TABLE SYSTEM
DISPOSITIF MOTORISÉ DE TRANSPORT DE SURFACES DE SUPPORT POUR UN SYSTÈME DE TABLE D'OPÉRATION

(30) Priorität: 28.07.2015 DE 102015009816
(43) Veröffentlichungstag der Anmeldung: 06.06.2018
(73) Patentinhaber: Maquet GmbH, 76437 Rastatt (DE)
(72) Erfinder: KOTTMANN, Heiko, 76437 Rastatt (DE)
(74) Vertreter: Zacco GmbH
(86) Internationale Anmeldenummer: PCT/EP2016/067136
(87) Internationale Veröffentlichungsnummer: WO 2017/016927

(56) Entgegenhaltungen:
- WO-A1-2014/184764
- US-B1- 6 772 850

## Beschreibung

### Hintergrund der Erfindung

Die vorliegende Erfindung betrifft einen Lagerflächentransporter, beispielsweise für einen Operationstisch. Bei Operationstischen ist es üblich, dass eine Lagerfläche zur Lagerung eines Patienten abnehmbar auf einem Sockel angebracht ist, und dass zum Transport der Lagerfläche und des Patienten ein motorisierter Lagerflächentransporter verwendet werden kann. Ein derartiger Lagerflächentransporter umfasst üblicherweise ein Oberteil zur Aufnahme der Lagerfläche des Operationstisches und ein Unterteil mit Rollen zum Verfahren des Lagerflächentransporters.

Hierbei werden üblicherweise vier Doppellenkrollen verwendet, damit der Lagerflächentransporter längs und quer zur Fahrtrichtung verschoben werden kann. Soll der Lagerflächentransporter über eine längere Strecke geradeaus verschoben werden, so ist eine stabilisierende Zusatzrolle notwendig. Diese Zusatzrolle garantiert den Geradeauslauf und verhindert ein Wegdriften des Lagerflächentransporters bei Kurvenfahrt. Diese Zusatzrolle muss mit einer definierten Kraft auf den Fußboden gedrückt werden, um ein Wegrutschen bei Kurvenfahrt zu verhindern. Will der Anwender allerdings quer zur Fahrrichtung den Transporter verschieben, so ist es notwendig die Zusatzrolle wieder vom Fußboden abheben zu können.

Dieses Absenken/Anheben dieser Zusatzrolle wird üblicherweise über ein Fußpedal bedient, in dem durch Drücken von oben das Pedal nach unten gedrückt wird und dadurch eine Feder oder Gasfeder gespannt wird, die wiederum ihre Kraft über einen Hebelmechanismus oder Bowdenzug an die Aufhängemechanik der Zusatzrolle überträgt und dadurch die Zusatzrolle auf den Fußboden drückt. Soll die Zusatzrolle wieder angehoben werden, so wird mit der Fußspitze das Pedal nach oben gezogen und die Zusatzrolle wird wieder vom Fußboden abgehoben. Das nach-oben-Ziehen des Pedals mit der Fußspitze ist von der Ergonomie für den Benutzer schwieriger durchzuführen als eine Betätigung des Pedals von oben durch treten.

Bekannte Lagerflächentransporter müssen samt Lagerfläche und Patient von Hand geschoben werden. Hierbei ist mitunter eine Gesamtmasse von bis zu 630kg zu bewegen. Ein Lagerflächentransporter ist beispielsweise in US 6,722,850 beschrieben.

Es ist daher Aufgabe der vorliegenden Erfindung, einen Lagerflächentransporter bereitzustellen, welcher besonders einfach sowohl für längere Strecken geradeaus verfahren werden kann, als auch in beliebige Richtungen für kurze Strecken rangiert werden kann. Es ist eine weitere Aufgabe der vorliegenden Erfindung, ein Gestell zum Lastentransport bereitzustellen, welches einfach und effizient sowohl motorisiert als auch manuell bewegt werden kann.

### Überblick über die Erfindung

Diese Aufgabe wird durch einen Lagerflächentransporter mit einem Oberteil zur Aufnahme eines zu transportierenden Gegenstandes, wie beispielsweise einer Lagerfläche eines Operationstisches, und mit einem Unterteil gelöst. Das Unterteil umfasst wenigstens drei Doppellenkrollen zum manuellen Verschieben des Lagerflächentransporters in eine beliebige Richtung, wenigstens eine motorisierte Antriebsrolle, und eine Absenkmechanik zum wahlweisen Absenken und Anheben der wenigstens einen Antriebsrolle relativ zu den Doppellenkrollen, wobei die Antriebsrolle(n) eine obere Position zum manuellen Verschieben des Lagerflächentransporters und eine untere Position zum manuellen und motorischen Verfahren des Lagerflächentransporters einnimmt/einnehmen. In der oberen Position der Antriebsrolle(n) kann somit der Lagerflächentransporter mittels der Doppellenkrollen einfach in jede gewünschte Richtung verschoben werden, während in der unteren Position die Antriebsrollen eine Antriebskraft auf den Untergrund ausüben können. Weiterhin können die Antriebsrollen in der unteren Position den Geradeauslauf des Lagerflächentransporters stabilisieren und ein Wegdriften in Kurven verhindern.

Die Absenkmechanik umfasst dabei ein Pedal, das in einer Betätigungsrichtung betätigbar ist, d.h. das Pedal wird beispielsweise durch Drücken nach unten betätigt. Die Absenkmechanik ist derart ausgestaltet, dass eine erste Betätigung des Pedals in der Betätigungsrichtung die wenigstens eine Antriebsrolle von der oberen in die untere Position absenkt und dass eine zweite Betätigung des Pedals in der Betätigungsrichtung die wenigstens eine Antriebsrolle von der unteren in die obere Position anhebt. Dadurch kann ein Benutzer durch mehrfaches Drücken des Pedals nach unten sowohl die obere, als auch die untere Position der Antriebsrolle(n) einstellen, ohne dass der Benutzer schwierige und ergonomisch ungünstige Bewegungen, wie beispielsweise das Anheben des Pedals mit der Fußspitze, ausführen muss.

Gemäß einigen Ausführungsformen kann vorgesehen sein, dass die Absenkmechanik wenigstens eine Drehstabfeder umfasst, welche in der unteren Position der Antriebsrolle(n) eine Kraft auf die Antriebsrolle(n) in Richtung eines Untergrunds des Lagerflächentransporters ausübt. Hierdurch kann ein Durchdrehen der Antriebsrolle(n) beim Antrieb des Lagerflächentransporters verhindert werden. Dabei kann das Pedal derart an der wenigstens einen Drehstabfeder angebracht sein, dass eine Betätigung des Pedals in der Betätigungsrichtung die Drehstabfeder tordiert. Somit kann die Drehstabfeder durch die Betätigung des Pedals gespannt werden, wobei die Kraft, mit welcher die Drehstabfeder die Antriebsrolle gegen den Untergrund drückt, durch Druck auf das Pedal erhöht werden kann.

Gemäß einigen Ausführungsformen kann die Absenkmechanik eine Kurvenscheibe und einen in einer Nut in der Kurvenscheibe geführten Führungsstift umfassen, wobei sich der Führungsstift bei der Betätigung des Pedals entlang eines geschlossenen Pfades zwischen einer Ausgangsposition und einer Rastposition bewegt. Somit kann durch die Kurvenscheibe und den Führungsstift erreicht werden, dass bei aufeinanderfolgenden Betätigungen des Pedals in der gleichen Betätigungsrichtung die Position des Führungsstifts jeweils zwischen der Ausgangsposition und der Rastposition wechselt. Hierbei kann die Ausgangsposition des Führungsstifts der oberen Position der Antriebsrolle(n) zugeordnet sein und die Rastposition des Führungsstifts kann der unteren Position der Antriebsrolle(n) zugeordnet sein.

Dabei kann der Führungsstift bei einer ersten Pedalbetätigung in Betätigungsrichtung entlang eines ersten Pfades von der Ausgangsposition zu einem ersten Anschlag und von dort zu der Rastposition bewegt werden. Beispielsweise kann vorgesehen sein, dass die erste Pedalbetätigung den Führungsstift von der Ausgangsposition zu dem ersten Anschlag bewegt, und dass bei einem Nachlassen der von einem Benutzer auf das Pedal ausgeübten Kraft der Führungsstift dann von dem ersten Anschlag in die Rastposition gleitet. Weiterhin kann der Führungsstift bei einer zweiten Pedalbetätigung in Betätigungsrichtung entlang eines zweiten Pfades von der Rastposition zu einem zweiten Anschlag und von dort zur Ausgangsposition bewegt werden. Hierbei kann beispielsweise vorgesehen sein, dass die zweite Pedalbetätigung den Führungsstift von der Rastposition zum zweiten Anschlag bewegt, und dass bei einem Nachlassen der von dem Benutzer auf das Pedal ausgeübten Kraft der Führungsstift vom zweiten Anschlag in die Ausgangsposition gleitet. Wenn der Absenkmechanismus wenigstens eine Drehstabfeder umfasst, kann diese während der Bewegung des Führungsstifts von der Ausgangsposition bis zum ersten Anschlag gespannt bzw. tordiert werden, und während der Bewegung vom zweiten Anschlag zur Ausgangsposition entspannt werden.

Gemäß einigen Ausführungsformen kann vorgesehen sein, dass die wenigstens eine Antriebsrolle an einer zugeordneten Wippe befestigt ist, wobei die Antriebsrolle(n) mittels der Wippe von der oberen in die untere Position und umgekehrt geschwenkt werden können. Dabei kann eine Feder derart zwischen der Wippe und dem Unterteil des Lagerflächentransporters gespannt sein, dass sie eine Kraft in Richtung zu der oberen Position auf die Antriebsrolle ausübt. Damit kann sichergestellt werden, dass die Antriebsrolle(n) zuverlässig wieder in die obere Position zurückgestellt werden, wenn der Lagerflächentransporter manuell in verschiedene Richtungen rangiert werden soll. Gemäß einigen Ausführungsformen kann vorgesehen sein, dass die Antriebsrolle(n) nicht lenkbar am Unterteil befestigt sind, so dass der Winkel zwischen den Achse(n) der Antriebsrolle(n) und beispielsweise einem Längsträger des Unterteils konstant ist. Derartige starre Antriebsrollen, die zusätzlich zu den Doppellenkrollen den Boden berühren, stabilisieren den Geradeauslauf des Lagerflächentransporters und verhindern das Wegdriften des Lagerflächentransporters in Kurven. Gemäß einigen Ausführungsformen kann vorgesehen sein, dass die wenigstens eine Antriebsrolle einen bürstenlosen Außenläufermotor umfasst. Dadurch kann ein besonders kompakter Antrieb realisiert werden, wobei der Rotor direkt die Funktion der Felge übernehmen kann.

Gemäß einigen Ausführungsformen können wenigstens zwei Antriebsrollen vorgesehen sein, die in ihrer unteren Position mittels wenigstens zwei Federelementen gegen den Untergrund gedrückt werden, wobei jeder Antriebsrolle ein eigenes Federelement zugeordnet ist. Dadurch können während des Verfahrens Bodenunebenheiten und Schwellen ausgeglichen werden, indem sich die Antriebsrollen einzeln nach oben oder unten bewegen, wobei durch die Federelemente jeweils ein ausreichender Anpressdruck auf dem Untergrund sichergestellt wird. Der Lagerflächentransporter kann somit auch über unebenen Untergrund motorisch verfahren werden, ohne dass eine Antriebsrolle den Kontakt mit dem Untergrund verliert oder aufgrund eines zu niedrigen Anpressdrucks durchdreht.

Ein weiterer Aspekt der vorliegenden Erfindung betrifft ein System, umfassend einen Operationstisch, welcher eine auf einem Sockel abnehmbar angebrachte Lagerfläche aufweist, und einen Lagerflächentransporter wie voranstehendbeschrieben. Ein derartiges System ermöglicht das prä- und postoperative Umlagern eines Patienten, wobei der Patient auf der Lagerfläche des Operationstisches verbleiben kann.

Noch ein weiterer Aspekt der vorliegenden Erfindung betrifft einen Rollenantrieb für ein Gestell zum Transportieren von Lasten, umfassend wenigstens drei Doppellenkrollen zum manuellen Verschieben des Gestells in eine beliebige Richtung, wenigstens eine motorisierte Antriebsrolle und eine Absenkmechanik zum wahlweisen Absenken und Anheben der wenigstens einen Antriebsrolle relativ zu den Doppellenkrollen, wobei die Antriebsrolle(n) eine obere Position zum manuellen Verschieben des Gestells und eine untere Position zum motorischen Verfahren des Gestells einnimmt/einnehmen. Hiermit können auch schwere Lasten durch einen Benutzer bewegt werden, denn die Doppellenkrollen ermöglichen einerseits ein Rangieren des Gestells in beliebige Richtungen auf engem Raum, und die motorisierte Antriebsrolle ermöglicht den Transport des Gestells auch über weitere Strecken mit geringer Anstrengung für den Benutzer.

Dabei umfasst die Absenkmechanik ein Pedal, das in einer Betätigungsrichtung betätigbar ist, d.h. das Pedal ist beispielsweise durch Drücken nach unten betätigbar. Die Absenkmechanik ist derart ausgestaltet, dass eine erste Betätigung des Pedals in der Betätigungsrichtung die Antriebsrolle(n) von der oberen in die untere Position absenkt und dass eine zweite Betätigung des Pedals in der Betätigungsrichtung die Antriebsrolle(n) von der unteren in die obere Position anhebt. Dadurch kann ein Benutzer durch mehrfaches Drücken des Pedals nach unten sowohl die obere, als auch die untere Position der Antriebsrolle(n) einstellen, ohne dass der Benutzer schwierige und ergonomisch ungünstige Bewegungen, wie beispielsweise das Anheben des Pedals mit der Fußspitze, ausführen muss.

### Kurze Beschreibung der Zeichnungen

Beispielhafte Ausführungsformen der vorliegenden Erfindung werden nachstehend unter Bezugnahme auf die angehängten Zeichnungen beschrieben, in welchen gleiche Bezugszeichen jeweils gleiche oder einander entsprechende Elemente bezeichnen.
- Fig. 1: zeigt eine perspektivische Ansicht eines Unterteils eines Lagerflächentransporters gemäß einer Ausführungsform der vorliegenden Erfindung;
- Fig. 2: zeigt eine Ansicht der Komponenten des Absenkmechanismus bei dem in Fig. 1 gezeigten Lagerflächentransporter;
- Fig. 3: zeigt eine Detailansicht des Absenkmechanismus bei dem in Fig. 1 gezeigten Lagerflächentransporter;
- Fig. 4: zeigt eine Ausschnittsvergrößerung der in Fig. 3 gezeigten Kurvenscheibe; und

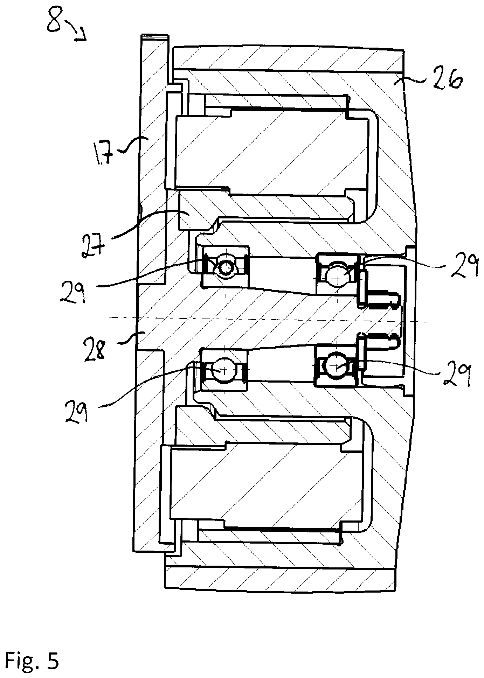

- Fig. 5: zeigt eine schematische Querschnittansicht einer Antriebsrolle gemäß einer Ausführungsform der vorliegenden Erfindung.

### Detaillierte Beschreibung

In der folgenden Beschreibung werden unter Bezugnahme auf die Zeichnungen beispielhafte Ausführungsformen der vorliegenden Erfindung beschrieben. Die Zeichnungen sind dabei nicht notwendigerweise maßstabsgetreu, sondern sollen die jeweiligen Merkmale lediglich schematisch illustrieren.

Dabei ist zu beachten, dass die nachstehend beschriebenen Merkmale und Komponenten jeweils miteinander kombiniert werden können, unabhängig davon, ob sie in Zusammenhang mit einer einzigen Ausführungsform beschrieben worden sind. Die Kombination von Merkmalen in den jeweiligen Ausführungsformen dient lediglich der Veranschaulichung des grundsätzlichen Aufbaus und der Funktionsweise der beanspruchten Vorrichtung.

Ein Lagerflächentransporter 1 gemäß einer Ausführungsform setzt sich im Wesentlichen aus einem Unterteil 2 und einem Oberteil 3 zusammen. Das Oberteil 3 ist derart ausgestaltet, dass eine Lagerfläche eines Operationstisches aufnehmen kann, um die Lagerfläche und den darauf gelagerten Patienten an einen gewünschten Ort zu transportieren. Die einzelnen Bestandteile und Funktionen des Oberteils 3 werden hier nicht näher beschrieben.

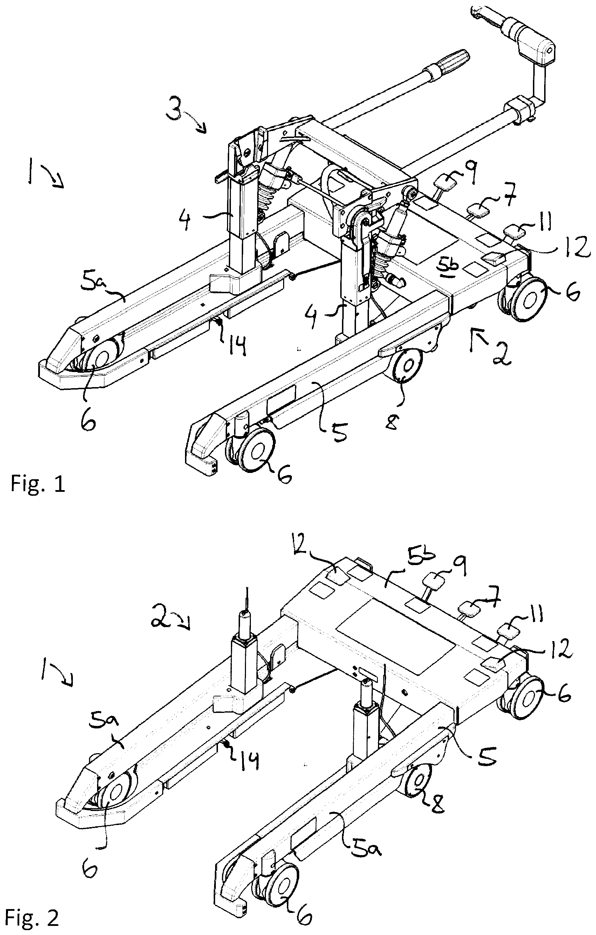

Fig. 2 zeigt ein Unterteil 2 eines derartigen Lagerflächentransporters 1, welches einen Rahmen 5 umfasst, welcher im gezeigten Beispiel aus zwei Längsträgern 5a und einem Querhaupt 5b aufgebaut ist. Zum manuellen Verschieben des Lagerflächentransporters 1 in eine beliebige Richtung sind eine Mehrzahl von Doppellenkrollen 6 vorgesehen. In der in Fig. 1 und 2 gezeigten Ausführungsform sind vier Doppellenkrollen 6 am Rahmen 5 angebracht, es ist jedoch alternativ auch möglich, drei, fünf, sechs oder noch mehr Doppellenkrollen 6 vorzusehen. Am Rahmen 5 kann ein Pedal 7 zum wahlweisen Arretieren und Freigeben der Doppellenkrollen 6 angebracht sein, um den Lagerflächentransporter 1 in einer gewünschten Position sicher zu fixieren.

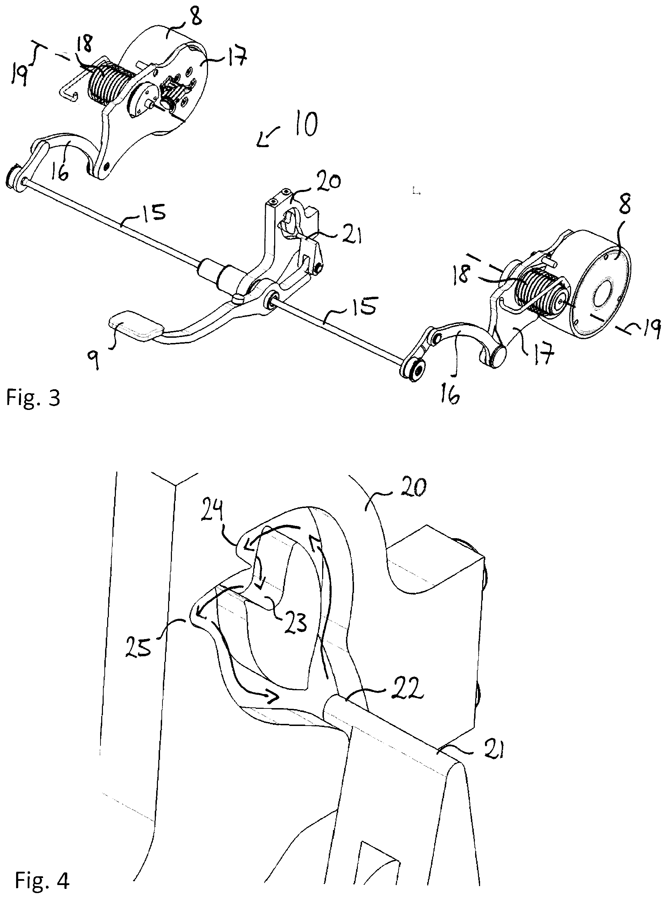

Bei der in Fig. 1 und 2 gezeigten Ausführungsform sind zwei motorisierte Antriebsrollen 8 am Rahmen 5 vorgesehen, die mithilfe eines manuell zu betätigenden Pedals 9 und einer Absenkmechanik 10 (siehe Fig. 3 und 4) jeweils entweder vom Fußboden abgehoben oder gegen den Fußboden gedrückt werden können. Gemäß anderer Ausführungsformen der Erfindung ist es möglich, statt der hier gezeigten zwei Antriebsrollen 8 lediglich eine einzige Antriebsrolle oder mehr als zwei Antriebsrollen vorzusehen.

Weiterhin kann am Rahmen 5 ein Pedal 11 zur Höhenverstellung des Oberteils 2 des Lagerflächentransporters 1, beispielsweise mittels eines Hydraulikmechanismus und einer durch das Pedal 10 betätigten Pumpe, vorgesehen sein, und es können zwei Fußschalter 12 zum prä- / postoperativen Lagerflächentransfer und eine Steuereinheit 13 am bzw. im Querhaupt 5b des Rahmens 5 aufgenommen sein.

Im Folgenden wird der Absenkmechanismus 10 für die Antriebsrollen 8 anhand der Fig. 3 und 4 erläutert. Der Absenkmechanismus 10 wird jeweils durch Drücken des Pedals 9 nach unten betätigt, d.h. sowohl das Absenken, als auch das Anheben der Antriebsrollen 8 wird durch eine Betätigung des Pedals 9 in die jeweils gleiche Richtung, d.h. durch Drücken des Pedals 9 nach unten in der gezeigten Ausführungsform, realisiert. Um eine Betätigung des Pedals 9 jeweils durch Drücken von oben zu realisieren wurde eine Mechanik entwickelt, welche eine Art Kugelschreiberprinzip nachbildet. Hierbei ist es möglich, zwei unterschiedliche Stellungen des Absenkmechanismus 10 zu realisieren.

Der Absenkmechanismus 10 umfasst eine Drehstabfeder 15, an welcher das Pedal 9 befestigt ist, und welcher über jeweils einen Hebel 16 mit einer Wippe 17 verbunden ist. Am anderen Ende der Wippe 17 ist jeweils eine Antriebsrolle 8 gelagert. Eine Schenkelfeder 18 ist derart auf der Drehachse 19 der Wippe 17 angeordnet, dass sie die Antriebsrolle 8 in ihrer angehobenen Position hält.

Weiterhin umfasst der Absenkmechanismus 10 eine am Rahmen 5 des Unterteils 3 befestigte Kurvenscheibe 20 und einen am Pedal 9 befestigten Führungsstift 21, welcher bei einer Betätigung des Pedals 9 entlang eines geschlossenen Pfads in der Kurvenscheibe 20 geführt wird. Wie in Fig. 4 gezeigt ist, definiert der Pfad in der Kurvenscheibe 20 eine erste Position 22 des Führungsstifts 21, in welcher die Antriebsrollen 8 vom Boden abgehoben sind und somit der Lagerflächentransporter 1 manuell in alle Richtungen verschoben werden kann. Bei Betätigung des Pedals 9 folgt der Führungsstift 21 dem in Fig. 4 durch Pfeile markierten Pfad und erreicht eine zweite Position 23, in welcher der Führungsstift 21 in einer Vertiefung gehalten wird. In dieser zweiten Position 23 des Führungsstifts ist die Drehstabfeder 15 über die jeweiligen Hebel 16 die Wippe 17 derart um ihre Achse 19 verdreht, dass die Antriebsrollen 8 abgesenkt werden und den Fußboden berühren.

Somit funktioniert der Absenkmechanismus 10 gemäß der vorliegenden Ausführungsform durch das Zusammenwirken der Drehstabfeder 15, welche die Anpresskraft erzeugt, und der Kurvenscheibe 20, mit der die beiden Stellungen der Antriebsrollen 8 ermöglicht werden.

Im Folgenden wird die Funktion des Absenkmechanismus 10 gemäß der in Fig. 2 bis 4 dargestellten Ausführungsform schrittweise beschrieben:
a. Zum Absenken und Anpressen der Antriebsrollen 8 betätigt der Anwender das Pedal 9 und bewegt damit die Wippen 17 mit den daran gelagerten Antriebsrollen 8 über die Drehstabfeder 15 und Hebel 16 in Richtung Boden. Gleichzeitig bewegt sich der am anderen Ende des Pedals 9 befindliche Führungsstift 21 in der Kurvenscheibe in Richtung der Position 24 des ersten Anschlags.
b. Während die Antriebsrollen 8 mit ihren jeweiligen Wippen 17 auf den Boden schwenken, werden die Schenkelfedern 18 auf den Wippenachsen 19 gespannt und ermöglichen damit ein Zurückschwenken der Antriebsrollen 8.
c. Wenn die Antriebsrollen 8 den Boden erreicht haben und der Anwender das Pedal 9 weiter durchdrückt, werden die beiden Drehstabfedern 15 soweit tordiert bis der Führungsstift 21 in der Kurvenscheibe 20 den ersten Anschlag 24 erreicht hat.
d. Nimmt der Anwender dann den Fuß vom Pedal 9, bewegt die Torsionsspannung das Pedal 9 wieder um einen kleinen Winkel zurück so dass sich der Führungsstift 21 in die Rastposition 23 bewegt und dort gehalten wird. In dieser Position werden die Antriebsrollen 8 mit einer definierten Kraft pro Rolle auf den Boden gepresst und der automatische Fahrbetrieb, bei dem der Lagerflächentransporter durch die Antriebsrollen 8 bewegt wird, ist möglich.
e. Sollen nun die Antriebsrollen 8 wieder nach oben geschwenkt werden, um den Lagerflächentransporter 1 manuell in unterschiedliche Richtungen rangieren zu können, drückt der Anwender wieder auf das Pedal 9 und bewegt damit den Führungsstift 21 gegen den zweiten Anschlag 25.
f. Nimmt der Anwender den Fuß wieder vom Pedal 9, entspannen sich die Drehstabfedern 15 und bewegen das Pedal 9 nach oben und den Führungsstift 21 in Richtung Ausgangsposition.
g. Sind die Drehstabfedern 15 vollständig entspannt, während die Antriebsrollen 8 noch auf dem Boden sind, schwenkt die in Schritt b. gespannte Schenkelfeder 18 die Wippe 17 mit der daran befestigten Antriebsrolle 8 nach oben, bis der Führungsstift 21 in der Führungsrinne der Kurvenscheibe 20 die Ausgangslage 22 erreicht hat.

Durch den Mechanismus ist es möglich, das Pedal 9 nur von oben zu betätigen und die Antriebsrollen 8 damit wahlweise entweder anzuheben oder abzusenken, wobei sie gegen den Boden gedrückt werden, um eine Kraftübertragung des Antriebsmechanismus zu ermöglichen. Durch die Drehstabfeder 15 wird die notwendige Kraft erzeugt, welche notwendig ist, um ein Durchrutschen bzw. Durchdrehen der Antriebsrollen 8 auf dem Untergrund zu verhindern. Der Anwender muss daher den Lagerflächentransporter 1 nicht manuell schieben, sondern er kann den Transporter bei Bedarf motorisiert und dadurch sehr effizient bewegen, wobei sowohl vorwärts, rückwärts, als auch Kurvenfahrt möglich ist.

Bei der in Fig. 1-4 gezeigten Ausführungsform sind die beiden motorisierten Antriebsrollen 8 dabei jeweils auf einer schwenkbaren Wippe 17 unter den beiden Längsträgern des Rahmens 5 gelagert und ermöglichen einen automatischen und spursicheren Fahrbetrieb. Der Absenkmechanismus 10, der sich unter dem Querhaupt des Rahmens 5 befindet und mit dem Pedal 9 betätigt wird, ermöglicht folgende zwei Stellungen der Antriebsrollen 8:
1. Stellung: Die Antriebsrollen 8 sind nach oben geschwenkt und ermöglichen dadurch ein manuelles Querverfahren des Lagerflächentransporters 1.
2. Stellung: Die Antriebsrollen 8 werden mit einer bestimmten Kraft auf den Boden gepresst, um ein Durchrutschen der Antriebsrollen während des motorisierten Verfahrens des Lagerflächentransporters 1 zu verhindern.

Bei der gezeigten Ausführungsform können zwei Drehstabfedern 15 vorgesehen sein, wobei jede Antriebsrolle 8 jeweils von einer eigenen Drehstabfeder 15 gegen den Untergrund gedrückt werden kann. Damit wird erreicht, dass sich beide Antriebsrollen 8 unabhängig voneinander nach oben und unten bewegen können, um Bodenunebenheiten auszugleichen, während die Anpresskraft der Antriebsrolle 8 gegen den Untergrund weiterhin von der entsprechenden Drehstabfeder 15 bereitgestellt wird. Dies kann durch eine entsprechende Auslegung (Federkennlinie) der Drehstabfedern 15 realisiert werden. Aufzugsschwellen können so ebenfalls ausgeglichen bzw. überwunden werden.

Fig. 4 zeigt eine schematische Schnittansicht einer motorisierten Antriebsrolle 8. Gemäß einer Ausführungsform können die Antriebsrollen 8 jeweils bürstenlose Außenläufermotoren sein, bei denen der gummierte Rotor 26 die Funktion der Felge übernimmt. Ein Statorträger 27 und eine Achse 28 sind auf der Wippe 17 verschraubt und nehmen die Wicklung bzw. die Lager 29 für den Rotor 26 auf.

Durch diesen hochintegrierten Aufbau ist es möglich, eine motorisierte Antriebsrolle 8 mit einem sehr platzsparenden Antrieb zu realisieren.

## Patentansprüche

1. Lagerflächentransporter (1) mit einem Oberteil (3) zur Aufnahme eines zu transportierenden Gegenstandes, wie beispielsweise einer Lagerfläche eines Operationstisches, und mit einem Unterteil (2), das Unterteil (2) umfassend:
wenigstens drei Doppellenkrollen (6) zum manuellen Verschieben des Lagerflächentransporters (1) in eine beliebige Richtung,
wenigstens eine motorisierte Antriebsrolle (8),
eine Absenkmechanik (10) zum wahlweisen Absenken und Anheben der wenigstens einen Antriebsrolle (8) relativ zu den Doppellenkrollen (6), wobei die Antriebsrolle(n) (8) eine obere Position zum manuellen Verschieben des Lagerflächentransporters (1) und eine untere Position zum motorischen Verfahren des Lagerflächentransporters (1) einnimmt/einnehmen, wobei die Absenkmechanik (10) ein Pedal (9) umfasst, das in einer Betätigungsrichtung betätigbar ist, und
wobei die Absenkmechanik (10) derart ausgestaltet ist, dass eine erste Betätigung des Pedals (9) in der Betätigungsrichtung die wenigstens eine Antriebsrolle (8) von der oberen in die untere Position absenkt und dass eine zweite Betätigung des Pedals (9) in der Betätigungsrichtung die wenigstens eine Antriebsrolle (8) von der unteren in die obere Position anhebt.

2. Lagerflächentransporter (1) nach Anspruch 1, wobei die Absenkmechanik (10) wenigstens eine Drehstabfeder (15) umfasst, welche in der unteren Position der Antriebsrolle(n) (8) eine Kraft auf die Antriebsrolle(n) (8) in Richtung eines Untergrunds des Lagerflächentransporters (1) ausübt.

3. Lagerflächentransporter (1) nach Anspruch 2, wobei das Pedal (9) derart an der wenigstens einen Drehstabfeder (15) angebracht ist, dass eine Betätigung des Pedals (9) in der Betätigungsrichtung die Drehstabfeder (15) tordiert

4. Lagerflächentransporter (1) nach einem der Ansprüche 1 bis 3, wobei die Absenkmechanik (10) eine Kurvenscheibe (20) und einen in einer Nut in der Kurvenscheibe (20) geführten Führungsstift (21) umfasst, wobei sich der Führungsstift (21) bei der Betätigung des Pedals (9) entlang eines geschlossenen Pfads zwischen einer Ausgangsposition (22) und einer Rastposition (23) bewegt.

5. Lagerflächentransporter (1) nach Anspruch 4, wobei der Führungsstift (21) bei einer ersten Pedalbetätigung in Betätigungsrichtung entlang eines ersten Pfades von der Ausgangsposition (21) zu einem ersten Anschlag (24) und von dort zu der Rastposition (23) bewegt wird, und wobei der Führungsstift (21) bei einer zweiten Pedalbetätigung in Betätigungsrichtung entlang eines zweiten Pfades von der Rastposition (23) zu einem zweiten Anschlag (25) und von dort zur Ausgangsposition (22) bewegt wird.

6. Lagerflächentransporter (1) nach einem der Ansprüche 1 bis 5, wobei die wenigstens eine Antriebsrolle (8) an einer zugeordneten Wippe (17) befestigt ist, und wobei eine Feder (18) derart zwischen der Wippe (17) und dem Unterteil (2) des Lagerflächentransporters (1) gespannt ist, dass sie eine Kraft in Richtung zu der oberen Position auf die Antriebsrolle (8) ausübt.

7. Lagerflächentransporter (1) nach einem der Ansprüche 1 bis 6, wobei die wenigstens eine Antriebsrolle (8) nicht lenkbar am Unterteil (2) befestigt ist.

8. Lagerflächentransporter (1) nach einem der Ansprüche 1 bis 7, wobei die wenigstens eine Antriebsrolle (8) einen bürstenlosen Außenläufermotor (26, 27, 28) umfasst.

9. Lagerflächentransporter (1) nach einem der Ansprüche 1 bis 8, wobei wenigstens zwei Antriebsrollen (8) vorgesehen sind, die in ihrer unteren Position mittels wenigstens zwei Federelementen (15) gegen den Untergrund gedrückt werden, wobei jeder Antriebsrolle (8) ein eigenes Federelement (15) zugeordnet ist.

10. System, umfassend einen Operationstisch, welcher eine auf einem Sockel abnehmbar angebrachte Lagerfläche aufweist, und einen Lagerflächentransporter (1) gemäß einem der Ansprüche 1 bis 9.

11. Rollenantrieb für ein Gestell (1) zum Transportieren von Lasten, umfassend:
wenigstens drei Doppellenkrollen (6) zum manuellen Verschieben des Gestells in eine beliebige Richtung,
wenigstens eine motorisierte Antriebsrolle (8),
eine Absenkmechanik (10) zum wahlweisen Absenken und Anheben der wenigstens einen Antriebsrolle (8) relativ zu den Doppellenkrollen (6), wobei die Antriebsrolle(n) (8) eine obere Position zum manuellen Verschieben des Gestells (1) und eine untere Position zum motorischen Verfahren des Gestells (1) einnimmt/einnehmen,
wobei die Absenkmechanik (10) ein Pedal (9) umfasst, das in einer Betätigungsrichtung betätigbar ist, und
wobei die Absenkmechanik (10) derart ausgestaltet ist, dass eine erste Betätigung des Pedals (9) in der Betätigungsrichtung die wenigstens eine Antriebsrolle (8) von der oberen in die untere Position absenkt und dass eine zweite Betätigung des Pedals (9) in der Betätigungsrichtung die wenigstens eine Antriebsrolle (8) von der unteren in die obere Position anhebt.

## Claims

1. A bearing surface transporter (1) with an upper part (3) for receiving an object to be transported, such as a bearing surface of an operating table, and with a lower part (2), wherein the lower part (2) comprises:
at least three double steering rollers (6) for manually displacing the bearing surface transporter (1) in any direction,
at least one motorized drive roller (8),
a lowering mechanism (10) for selectively lowering and lifting the at least one drive roller (8) relatively to the double steering rollers (6), wherein the drive roller(s) (8) assume(s) an upper position for manually displacing the bearing surface transporter (1) and a lower position for motorically moving the bearing surface transporter (1),
wherein the lowering mechanism (10) comprises a pedal (9) which can be actuated in an actuating direction, and
wherein the lowering mechanism (10) is designed such that a first actuation of the pedal (9) in the actuation direction lowers the at least one drive roller (8) from the upper to the lower position and that a second actuation of the pedal (9) in the actuation direction lifts the at least one drive roller (8) from the lower to the upper position.

2. The bearing surface transporter (1) according to claim 1, wherein the lowering mechanism (10) comprises at least one torsion bar spring (15) which applies a force to the drive roller(s) (8) in the direction of an underground of the bearing surface transporter (1) in the lower position of the drive roller(s) (8).

3. The bearing surface transporter (1) according to claim 2, wherein the pedal (9) is attached to the at least one torsion bar spring (15) such that an actuation of the pedal (9) in the actuation direction twists the torsion bar spring (15).

4. The bearing surface transporter (1) according to any of claims 1 to 3, wherein the lowering mechanism (10) comprises a cam disc (20) and a guide pin (21) guided in a groove in the cam disc (20), wherein the guide pin (21) moves along a closed path between a start position (22) and a rest position (23) upon actuation of the pedal (9).

5. The bearing surface transporter (1) according to claim 4, wherein the guide pin (21), upon a first pedal actuation in the actuation direction, is moved along a first path from the start position (21) to a first stop (24) and from there to the rest position (23), and wherein the guide pin (21), upon a second pedal actuation in the actuation direction, is moved along a second path from the rest position (23) to a second stop (25) and from there to the start position (22).

6. The bearing surface transporter (1) according to any of claims 1 to 5, wherein the at least one drive roller (8) is fixed to an associated rocker (17), and wherein a spring (18) is tensioned between the rocker (17) and the lower part (2) of the bearing surface transporter (1) such that it applies a force to the drive roller (8) in the direction to the upper position.

7. The bearing surface transporter (1) according to any of claims 1 to 6, wherein the at least one drive roller (8) is fixed to the lower part (2) in a non-steerable manner.

8. The bearing surface transporter (1) according to any of claims 1 to 7, wherein the at least one drive roller (8) comprises a brushless external rotor motor (26, 27, 28).

9. The bearing surface transporter (1) according to any of claims 1 to 8, wherein at least two drive rollers (8) are provided, which, in their lower position, are pressed against the underground by means of at least two spring elements (15), wherein each drive roller (8) has its own associated spring element (15).

10. A system, comprising an operating table which has a bearing surface removably attached to a base, and a bearing surface transporter (1) according to any of claims 1 to 9.

11. A roller drive for a rack (1) for transporting loads, comprising:
at least three double steering rollers (6) for manually displacing the rack in any direction,
at least one motorized drive roller (8),
one lowering mechanism (10) for selectively lowering and lifting the at least one drive roller (8) relative to the double steering rollers (6), wherein the drive roller(s) (8) assume(s) an upper position for manually displacing the rack (1) and a lower position for motorically moving the rack (1), wherein the lowering mechanism (10) comprises a pedal (9) which can be actuated in an actuating direction, and
wherein the lowering mechanism (10) is designed such that a first actuation of the pedal (9) in the actuation direction lowers the at least one drive roller (8) from the upper to the lower position and that a second actuation of the pedal (9) in the actuation direction lifts the at least one drive roller (8) from the lower to the upper position.

## Revendications

1. Dispositif de transport de surfaces de support (1) avec une partie supérieure (3) pour la réception d'un objet à transporter, par exemple une surface de support d'une table d'opération, et avec une partie inférieure (2), la partie inférieure (2) comprenant :
au moins trois doubles roulettes de guidage (6) pour le coulissement manuel du dispositif de transport de surfaces de support (1) dans une direction quelconque,
au moins une roulette d'entraînement motorisée (8),
un mécanisme d'abaissement (10) pour abaisser et soulever au choix l'au moins une roulette d'entraînement (8) par rapport aux doubles roulettes de guidage (6), dans lequel la(les) roulette(s) d'entraînement (8) adopte/adoptent une position supérieure pour le coulissement manuel du dispositif de transport de surfaces de support (1) et une position inférieure pour le déplacement motorisé du dispositif de transport de surfaces de support (1),
dans lequel le mécanisme d'abaissement (10) comprend une pédale (9), qui peut être actionnée dans une direction d'actionnement, et
dans lequel le mécanisme d'abaissement (10) est configuré de sorte qu'un premier actionnement de la pédale (9) dans la direction d'actionnement abaisse l'au moins une roulette d'entraînement (8) de la position supérieure à la position inférieure et qu'un deuxième actionnement de la pédale (9) dans la direction d'actionnement soulève l'au moins une roulette d'entraînement (8) de la position inférieure à la position supérieure.

2. Dispositif de transport de surfaces de support (1) selon la revendication 1, dans lequel le mécanisme d'abaissement (10) comprend au moins une barre de torsion (15), laquelle exerce dans la position inférieure de la (des) roulette(s) d'entraînement (8) une force sur la (les) roulette(s) d'entraînement (8) en direction d'un sol du dispositif de transport de surfaces de support (1).

3. Dispositif de transport de surfaces de support (1) selon la revendication 2, dans lequel la pédale (9) est montée au niveau de l'au moins une barre de torsion (15) de sorte qu'un actionnement de la pédale (9) dans la direction d'actionnement tord la barre de torsion (15).

4. Dispositif de transport de surfaces de support (1) selon l'une quelconque des revendications 1 à 3, dans lequel le mécanisme d'abaissement (10) comprend une came (20) et une broche de guidage (21) guidée dans une rainure dans la came (20), dans lequel la broche de guidage (21) se déplace lors de l'actionnement de la pédale (9) le long d'un chemin fermé entre une position de départ (22) et une position d'arrêt (23).

5. Dispositif de transport de surfaces de support (1) selon la revendication 4, dans lequel la broche de guidage (21) est déplacée lors d'un premier actionnement de pédale dans la direction d'actionnement le long d'un premier chemin de la position de départ (21) à une première butée (24) et de là à la position d'arrêt (23), et dans lequel la broche de guidage (21) est déplacée lors d'un deuxième actionnement de pédale dans la direction d'actionnement le long d'un deuxième trajet de la position d'arrêt (23) à une deuxième butée (25) et de là à la position de départ (22).

6. Dispositif de transport de surfaces de support (1) selon l'une quelconque des revendications 1 à 5, dans lequel l'au moins une roulette d'entraînement (8) est fixée à une bascule (17) associée, et dans lequel un ressort (18) est serré entre la bascule (17) et la partie inférieure (2) du dispositif de transport de surfaces de support (1) de sorte qu'il exerce une force en direction de la position supérieure sur la roulette d'entraînement (8).

7. Dispositif de transport de surfaces de support (1) selon l'une quelconque des revendications 1 à 6, dans lequel l'au moins une roulette d'entraînement (8) est fixée non dirigeable au niveau de la partie inférieure (2).

8. Dispositif de transport de surfaces de support (1) selon l'une quelconque des revendications 1 à 7, dans lequel l'au moins une roulette d'entraînement (8) comprend un moteur à rotor extérieur sans balais (26, 27, 28).

9. Dispositif de transport de surfaces de support (1) selon l'une quelconque des revendications 1 à 8, dans lequel au moins deux roulettes d'entraînement (8) sont prévues, qui sont poussées dans leur position inférieure au moyen d'au moins deux éléments ressort (15) contre le sol, dans lequel un élément ressort (15) propre est associé à chaque roulette d'entraînement (8).

10. Système, comprenant une table d'opération, laquelle présente une surface de support montée de façon amovible sur un socle, et un dispositif de transport de surfaces de support (1) selon l'une quelconque des revendications 1 à 9.

11. Entraînement de roulette pour un châssis (1) pour le transport de charges, comprenant :
au moins trois doubles roulettes de guidage (6) pour le coulissement manuel du châssis dans une direction quelconque, au moins une roulette d'entraînement motorisée (8),
un mécanisme d'abaissement (10) pour abaisser et soulever au choix l'au moins une roulette d'entraînement (8) par rapport aux doubles roulettes de guidage (6), dans lequel la(les) roulette(s) d'entraînement (8) adopte/adoptent une position supérieure pour le coulissement manuel du châssis (1) et une position inférieure pour le déplacement motorisé du châssis (1),
dans lequel le mécanisme d'abaissement (10) comprend une pédale (9), qui peut être actionnée dans une direction d'actionnement, et
dans lequel le mécanisme d'abaissement (10) est configuré de sorte qu'un premier actionnement de la pédale (9) dans la direction d'actionnement abaisse l'au moins une roulette d'entraînement (8) de la position supérieure à la position inférieure et qu'un deuxième actionnement de la pédale (9) dans la direction d'actionnement soulève l'au moins une roulette d'entraînement (8) de la position inférieure à la position supérieure.
